# EUROPEAN PATENT APPLICATION

(11) **EP 4 601 175 A1**
(43) Date of publication of application: **13.08.2025**
(21) Application number: 24156069.7
(22) Date of filing: 06.02.2024
(51) Int. Cl.: H02M 1/32, H02M 3/00, H02M 3/335, H02M 1/36

(54) **METHOD OF OF BIDIRECTIONAL DC CONVERSION, AND SERIES RESONANT CONVERTER**

(71) Applicant: ABB E-mobility B.V., 2629 JG Delft (NL)
(72) Inventor: ROTHMUND, Daniel, 5243 Mülligen (CH); CHRISTEN, Daniel, 8610 Uster (CH); STOJADINOVIC, Milos, 5400 Baden (CH); PETTERSSON, Sami, 8953 Dietikon (CH); CANALES, Francisco, 5405 Baden-Dättwil (CH)
(74) Representative: Zimmermann & Partner Patentanwälte mbB

(57) **Abstract**

A method (100) of bidirectional DC conversion in a series resonant converter, SRC (10), and a corresponding SRC are provided. The SRC (10) comprises a primary side (12), a secondary side (14) and a resonant tank (22) having a resonant frequency and a resonant impedance, each side (12, 14) having a DC terminal (16); and a bridge circuit (20) connected to the DC terminal (16) and to the resonant tank (22), and being adapted to be cyclically activated at a variably selectable switching frequency to convert power between the DC terminal (16) and the resonant tank (22). The method comprises: operating (102) the SRC (10) for a power flow from one of the primary and secondary sides (12, 14) to the other side by activating the bridge circuit (20) of at least the one side at a first switching frequency; changing (106) operation of the SRC (10) for increasing the impedance of the resonant tank (22); and, when the impedance has been increased, reversing (104) the direction of the power flow, so that the SRC (10) is operated for a power flow from the other side to the one side.

## Description

### TECHNICAL FIELD

Embodiments of the present disclosure relate to a method of bidirectional DC conversion in a series resonant converter, the method in particular effecting a reduction of amplitude of inrush current oscillations during reversing the direction of power flow. Embodiments of the present disclosure also relate to a series resonant converter for bidirectional DC conversion with reduced inrush current oscillation amplitude.

### BACKGROUND

In the evolving field of power electronics, the refinement of series resonant converters is a key challenge in the quest for more efficient and robust power systems. Such converters are essential in managing the flow and quality of power in applications ranging from industrial machinery to renewable energy systems. However, they are susceptible to inrush current oscillations, particularly under certain operating conditions. Such oscillations pose a risk to system stability, component integrity and overall performance. Managing these inrush currents is not just about protecting equipment; in fact, it is about improving the efficiency, reliability and longevity of power systems. As technology advances and the demand for more complex and resilient power solutions increases, the need to mitigate these problems is becoming more critical and a major concern for engineers in the field.

### TERMS AND DEFINITIONS

This application uses terms that are briefly explained below.

The term DC refers to direct current, and AC refers to alternating current.

In this document, "or" is understood as a non-exclusive disjunction. Thus, the expression "A or B" means that at least one of the statements A, B involved is true. Alternatively, the expression "A or B" is understood as an explanation of feature A by feature B.

The term "in particular" is understood as "optionally".

The term "about" as used herein typically implies that there may be a certain deviation, e.g. up to 1%, up to 3% or up to 10%, from the characteristic denoted with said term.

### SUMMARY

In view of the above, a method of bidirectional DC conversion in a series resonant converter according to claim 1, and a series resonant converter for bidirectional DC conversion according to claim 10 are provided.

The method and the series resonant converter (SRC) according to aspects of the invention allow reducing inrush current oscillations. Namely, during reversal of the power flow direction the SRC operates under no-load or low load conditions. Thereby, the reversal of the power flow direction may cause inrush current oscillations; and the change of the operation of the SRC for increasing the impedance of the resonant tank (e.g., by changing a switching frequency to a second switching frequency, at which the impedance of the resonant tank is increased), reduces the amplitude of the inrush current oscillations during the reversal. Thus, bidirectional DC conversion with reduced inrush current oscillation amplitude becomes possible.

If the change of operation is only temporary during a limited time interval including the power flow reversal (e.g., for no more than a limited amount of AC cycles such as 1000 cycles, preferably no more than 400 cycles), any losses due to the operation of the SRC for increasing the impedance are kept small or even negligible.

Further aspects, advantages and features of the present disclosure are apparent from the dependent claims, the description and the accompanying drawings.

### BRIEF DESCRIPTION OF THE DRAWINGS

So that the manner in which the above recited features of the present disclosure can be understood in detail, a more particular description of the present disclosure, briefly summarized above, may be had by reference to typical embodiments. The accompanying drawings relate to embodiments of the present disclosure and are described in the following:
Figs. 1a, 1b show circuit diagrams of series resonant converters according to embodiments described herein;
Fig. 2 shows a graph illustrating current and voltage curves during the power flow direction reversal without any countermeasures according to an illustrative example;
Figs. 3 shows a block diagram of a series resonant converter according to embodiments described herein;
Fig. 4 shows a flow chart of a method of reducing inrush current oscillations in a series resonant converter, according to embodiments described herein;
Figs. 5 shows graphs illustrating a) the switching frequency curve over time and b) current and voltage curves during the power flow direction reversal over time, according to embodiments described herein; and
Fig. 6 shows graphs illustrating input and output side transformer currents and bridge voltages before, during and after power flow reversal using the frequency modulation of the invention, according to embodiments described herein.

### DETAILED DESCRIPTION OF EMBODIMENTS

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described.

The reference numbers of the figures are used merely for illustration. The aspects of the invention are not limited to any particular embodiment. Instead, any aspect or embodiment described herein can be combined with any other aspect or embodiment described herein unless specified otherwise.

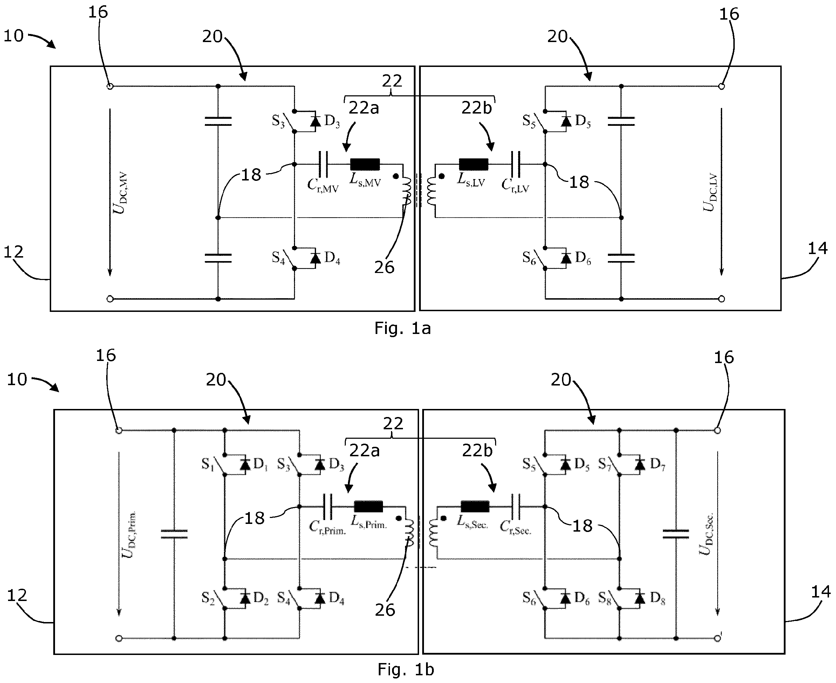

Figs. 1a, 1b show circuit diagrams of series resonant converters (SRCs) according to embodiments of the invention. Such SRC, Bidirectional DC/DC converters, in particular the Half-Cycle Discontinuous Conduction Mode (HC-DCM-SRC) series resonant converter, are an attractive solution for closely coupling two DC buses with different voltage levels while providing galvanic isolation.

The SRC 10 shown in both Figures 1a and 1b comprises a primary side 12, a secondary side 14 and a resonant tank 22. The resonant tank 22 has a resonant frequency and a resonant impedance. Each side 12, 14 has a DC terminal 16; and a bridge circuit 20 connected to the DC terminal 16 and to the resonant tank 22, and being adapted to be cyclically activated at a variably selectable switching frequency to convert power between the DC terminal 16 and the resonant tank 22.

From another perspective, the SRC 10 of Figs. 1a and 1b comprises a primary side 12 and a secondary side 14, each side
i) having a DC terminal 16 and an AC terminal 18 and being adapted to be cyclically activated at a selectable switching frequency to convert power between its DC terminal 16 and its AC terminal 18, and
ii) comprising
   - a resonant tank portion 22a, 22b, the resonant tank portions 22a, 22b of both sides 12, 14 being interconnected and forming a resonant tank 22 having a resonant frequency and a resonant impedance, and
   - a bridge circuit 20 connecting the DC terminal 16 and the resonant tank 22 via the AC terminal 18.

Thus, each side 12, 14 has a resonant tank portion 22a, 22b. The resonant tank portions form an LC circuit with a capacitance and an inductance, and have a resonant frequency and a resonant impedance. In Fig. 1a, the capacitance and an inductance of the resonant tank portion 22a and 22b are referred to as C_{r,MV}, L_{s,MV} and C_{r,LV}, L_{s,LV}, respectively. In this embodiment, the primary side is a medium-voltage side and the secondary side is a low-voltage side. While this setup is possible and a generally preferred aspect, the invention is not limited to these voltage levels of the primary and secondary side. In Fig. 1b, the capacitance and an inductance of the resonant tank portion 22a and 22b are referred to as C_{r, Prim}, L_{s,Prim} and C_{r,Sec}, L_{s, Sec}, respectively. In spite of this difference in nomenclature, both configurations of Figs. 1a and 1b are suitable for general voltage levels in the primary and secondary side and their respective resonant tank portions 22a, 22b.

The resonant tank portions 22a, 22b are coupled to each other (here: by a transformer 26) and thereby form a single resonant unit referred to as resonant tank 22. Due to the coupling, the resonant tank has a common resonance with a common resonant frequency and resonant impedance (or common resonances, each with a respective common resonant frequency and resonant impedance).

While Fig. 1b shows an SRC in a full-bridge configuration, Fig. 1a shows an SRC in a half-bridge configuration, with the present disclosure applying in the same way to both configurations, and not limited to these configurations.

In both Figs. 1a and 1b, the primary and secondary sides 12, 14 are connected by the resonance tank 22. The resonance tank 22 is formed by resonance capacitors and inductances (e.g. leakage inductances), see *C_{r,x}, L_{s,x}* in the circuit diagram of Fig. 1b. Specifically, the resonant tank 22 has resonant tank portions 22a, 22b of the primary and secondary sides 12, 14, and these resonant tank portions 22a, 22b are connected to the respective bridge circuit 20 via a respective AC terminal 18. The resonant tank 22 further comprises a transformer 26 inductively coupling the resonant tank portions 22a, 22b of both sides 12, 14 to each other.

The resonance tank 22 has a very low impedance at the resonance frequency. In an idealized case, by selecting a switching frequency at or slightly below the resonant frequency, the primary and secondary DC voltage transfer ratio is only dependent on the transformer turns ratio and is load independent over a wide operating range. This means that the system is self-regulating with respect to the primary and secondary DC voltages and can be operated in open loop.

An exception to this is the low load condition and especially the no-load condition. Assuming the SRC 10 is operated with an active secondary side 14 and a passive primary side 12, and no load is applied to the primary side 12 of the converter 10, an undamped oscillation will occur between the transformer leakage inductance and the output capacitances of the primary switches and diodes, a so-called ringing. This oscillation causes the voltage across the switches to overshoot. With each switching cycle, this overshoot is rectified by the primary diodes of the converter 10 and adds a certain amount of charge to the output DC link capacitor. Since the primary diodes block reverse current and the output capacitor is not discharged during low or no load conditions, this effect causes the primary voltage to increase slightly over time compared to a condition with a load connected. In this case, the ratio between the secondary and primary DC voltages is no longer determined by the transformer turns ratio.

In particular, a challenging issue is the reversal of the power flow direction under no-load conditions. If the power flow direction is reversed, so that the secondary side 14 is passive and the primary side 12 is active, the converter 10 will immediately attempt to restore the steady-state condition with respect to the transformer turns ratio. As the primary voltage is higher than its steady-state level, power will start to flow from the primary side 12 to the secondary side 14. As the capacitor on the secondary side charges, the capacitor on the active primary side discharges. Due to the low impedance of the resonant tank 22, this process typically takes only a few switching cycles. The inrush current generated can be orders of magnitude higher than the full load current and can destroy the semiconductors or resonant capacitors. This high inrush current must therefore be avoided or limited.

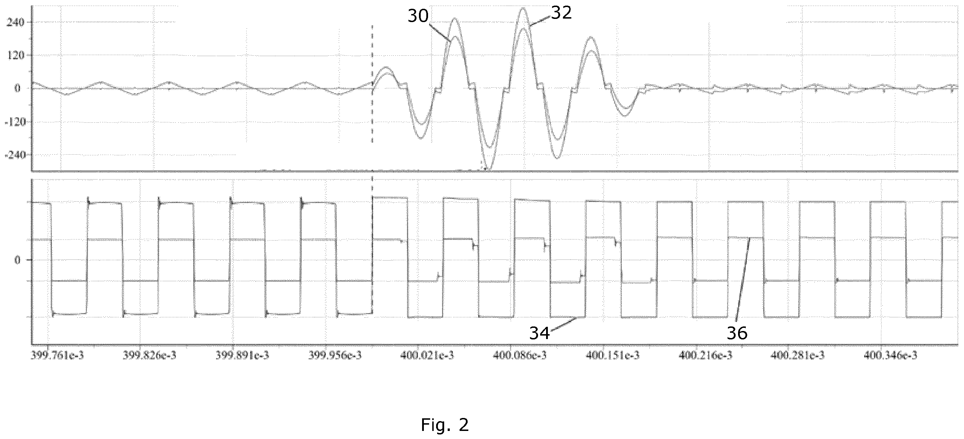

Fig. 2 shows the relevant voltages and currents when the power flow direction is reversed without any countermeasures. The primary and secondary transformer currents 30, 32 and bridge voltages 34, 36 before, during and after the power flow direction are reversed by stopping secondary modulation and starting primary modulation simultaneously. The currents 30, 32 in this example are about 300A. This scenario can occur in both directions, e.g. active secondary side 14 to passive primary side 12 and active primary side 12 to passive secondary side 14.

Thus, if the power flow direction was reversed under the above conditions, there would be a problem that parasitic oscillations may result in an increased output voltage on the passive side. If the power flow direction is reversed, the converter would bring the voltages on the input and output sides back to the equilibrium. During this process, the HC-DCM-SRC would be subjected to significant inrush current oscillations with excessive amplitudes. In the following, it is described how this problem is at least reduced according to embodiments of the invention.

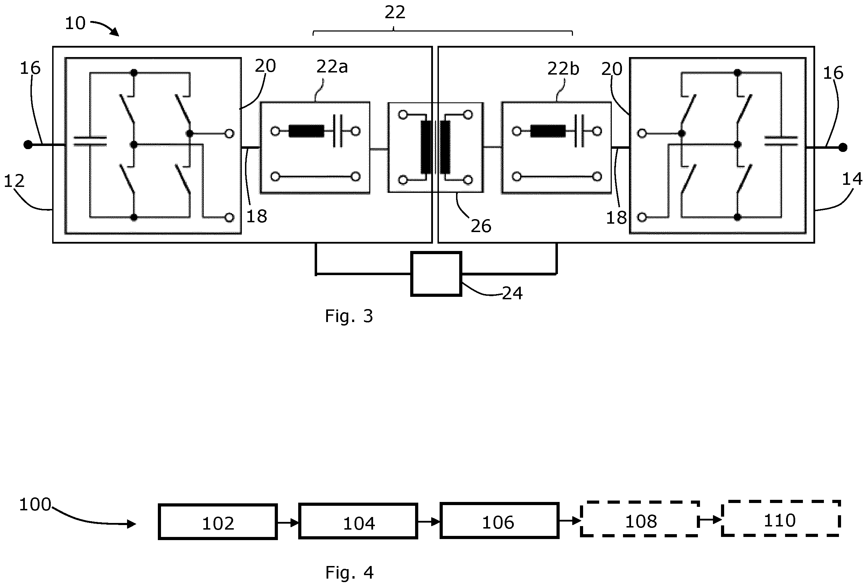

Figs. 3 show a block diagram of a series resonant converter according to embodiments of the present invention, and Fig. 4 shows a flow chart of a method of reducing inrush current oscillations in a series resonant converter, according to embodiments of the present invention. Details explained with illustrative reference to Figs. 3 and 4 shall not be understood as limited to the elements of these Figures. Rather, those details may also be combined with further embodiments explained with illustrative reference to the other figures.

As shown in Fig. 4, a method 100 of bidirectional DC conversion in a series resonant converter, SRC 10, and in particular of reducing inrush current oscillations in the SRC 10 during bidirectional DC conversion is provided.

The SRC 10, shown in Fig. 3, comprises the same elements as shown in Fig. 1b, and the above description of Fig. 1b also applies to Fig. 3.

The SRC 10 comprises:
a primary side 12 and a secondary side 14 directly or indirectly connected to each other, each side 12, 14
i) having a DC terminal 16 and an AC terminal 18 and being adapted to be cyclically activated at a selectable switching frequency to thereby act as an input side to convert power between its DC terminal 16 and its AC terminal 18, thereby facilitating power flow from the input side to the other side and reversal of power flow direction, said reversal causing inrush current oscillations under no-load or low load conditions, and
ii) comprising
   - resonant tank portion 22a, 22b, the resonant tank portions 22 of both sides 12, 14 being interconnected and forming a resonant tank 22 having a resonant frequency and a resonant impedance; and
   - a bridge circuit 20 connecting the DC terminal 16 and the resonant tank 22 via the AC
      terminal 18; and

In the SRC 10 as shown in Fig. 1a, 1b, and 3, the primary side 12 and a secondary side 14 are connected via a transformer 26. The transformer 26 performs several functions by providing
- voltage conversion capability, i.e. it steps up or down the voltage between the primary and secondary sides 12, 14 according to the requirements of the bidirectional DC conversion process;
- galvanic isolation between the primary and secondary sides 12, 14, which increases safety and prevents direct electrical connection between the two sides 12, 14;
- power transfer between the primary and secondary sides 12, 14, thereby enabling bidirectional power flow.

In addition, in Fig. 3 a controller 24 is shown, which controls operation of both sides 12, 14 of the SRC (e.g., of their bridge circuits 20), e.g., according to the method described in the following.

The method 100 comprises:
a) a step 102 of operating the SRC 10 for a power flow from one of the primary and secondary sides 12, 14 to the other side by activating the bridge circuit 20 of at least the one side at a first switching frequency;
b) a step 104 of changing operation of the SRC 10 for increasing the impedance of the resonant tank 22; and
c) when the impedance has been increased, a step 106 of reversing the direction of the power flow, so that the SRC 10 is operated for a power flow from the other side to the one side.
Thereby, a series resonant converter, SRC 10, for bidirectional DC conversion with reduced inrush current oscillation amplitude is provided.

Optionally, the method may further comprise at least one of the following:
d) a step 108 of changing operation of the SRC 10 for decreasing the impedance of the resonant tank 22 (e.g., changing the switching frequency (back) to the first switching frequency, or to a third frequency which may be, in comparison to the second frequency, closer to the first frequency and/or to the resonance frequency of the resonant tank 22);
e) a step 110 of operating the SRC 10 for a power flow from the other side to the one side by activating the bridge circuit 20 of at least the other side, in particular by activating the bridge circuit 20 of at least the other side at the first or third switching frequency.

The steps do not need to strictly follow after one another as suggested by Fig. 4, but different steps shown as subsequent steps in Fig. 4 may also overlap with each other and thereby portions of two subsequent steps may be performed at the same time.

In embodiments, step b) (104) includes changing the switching frequency of the bridge circuit 20 of at least the one side (e.g., of any of the two sides having an actively switched bridge) to a second switching frequency at which the impedance of the resonant tank 22 is increased relative to the first switching frequency.

In embodiments, step c) (106) is performed when the switching frequency has been changed to the second switching frequency, and includes reversing 104 the direction of the power flow, whereby the bridge circuits 20 of the one side and the other side are activated cyclically at the second switching frequency.

In embodiments, the first frequency is closer to a resonance frequency of the resonant tank 22 than the second frequency, in particular wherein the difference of the second frequency from the resonant frequency is at least 10 times the difference of the first frequency from the resonant frequency.

In embodiments, the second frequency is by at least 50% higher than the first frequency.

In embodiments, at least step c) (106) includes activating the bridge circuit 20 of both the primary and secondary sides, in particular at the same switching frequency.

In embodiments, step b) (104) and optionally step d) (108) comprises changing the switching frequency and/or the resonant frequency of the resonant tank 22 gradually, in particular in the form of an ascending or descending ramp, and in particular during a transient period having a length of at least 6 cycles, preferably at least 20 cycles.

In particular embodiments, step a) (102) may include operating the SRC 10 under no-load or low load conditions for a power flow from one of the primary and secondary sides 12, 14 to the other side by activating said one side thereby acting as an input side.

Step 106 may include reversing the direction of the power flow by activating the other side, thereby becoming the input side, the one side and the other side being activated cyclically and alternately at the switching frequency, the reversal of the power flow direction causing inrush current oscillations. Step 104 may include controlling the switching operation of the SRC 10 to increase the impedance of the resonant tank 22 of the input side above the resonant impedance prior to the power flow reversal, thereby reducing the amplitude of the inrush current oscillations during the reversal.

Thus, the controller 24 may be adapted to control the switching operation of the SRC 10 under no-load or low load conditions i) for a power flow from the input side 12, 14 to the other side 14, 12, ii) for cyclically and alternately reversing the direction of power flow at the switching frequency, and iii) for increasing the impedance of the resonant tank 22 of the input side above the resonant impedance, thereby reducing the amplitude of the inrush current oscillations during the reversal.

Reversing the direction of power flow by alternately activating the primary and secondary sides 12, 14 reduces the risk of interruption and increases the flexibility of the converter 10.

The primary and secondary sides 12, 14, each with DC and AC terminals 16, 18, adaptable to cyclic activation at selectable frequencies, allow power conversion between different voltage levels while maintaining system stability.

The controller 24, which adjusts the switching operation under certain load conditions to increase/decrease the impedance of the resonant tank, is designed to operate in such a way that inrush current oscillations are reduced, significantly improving system reliability and longevity.

Taken together, the concept of the method 100 and the series resonant converter 10 of the invention enables the amplitude of inrush current oscillations to be effectively reduced, thereby protecting the system from potential damage due to excessive current, in particular by controlling the switching operation to increase the impedance of the resonant tank 22 prior to power flow reversal.

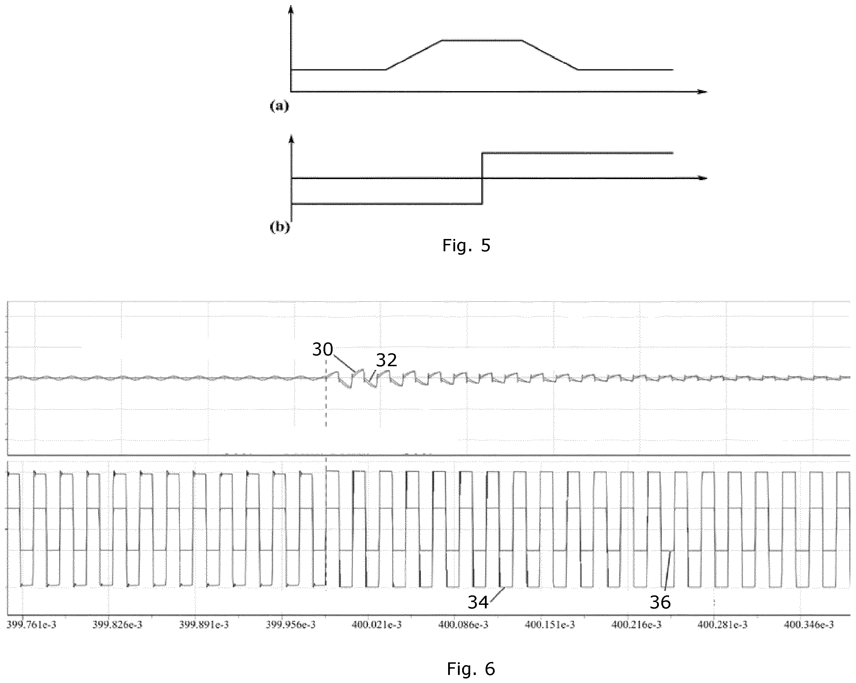

Fig. 5 shows graphs illustrating a) the switching frequency curve over time and b) the power flow direction, and Fig. 6 shows graphs illustrating input and output side transformer currents and bridge voltages before, during and after power flow reversal using the described frequency modulation, according to embodiments described herein. Details explained with illustrative reference to Figs. 5, 6 shall not be understood as limited to the elements of these Figs.

According to embodiments described herein, increasing the impedance of the converter 10 to limit the sudden step in the applied voltage and the resulting transient current can be done by modifying the switching frequency of the converter (of its bridges on the input side and optionally on the output side if/when they are actively switched). In particular, the switching frequency is modified from the initial first frequency to a second frequency (frequency at the center of the curve of Fig. 5 a)), at which the impedance of the resonant tank is higher than that at the first frequency. Typically, the first frequency is at or close to (e.g., up to a tolerance of at most 5%) the resonant frequency of the resonant tank, whereas the second frequency is farther away from the resonance, i.e., increased to a level well above the resonance (say, deviating by at least 20%, preferably 50%, more preferably 100% from the resonant condition). By increasing the switching frequency of the converter by a certain factor (the factor, by which the first frequency is multiplied for obtaining the second frequency being, e.g., at least 1.2, preferably at least 1.5, more preferably at least 2.0, and/or at most 10.0, preferably at most 5.0, and more preferably at most 3.5), the impedance of the resonance tank 22 is increased. Thereby, the converter is operated in continuous conduction mode (CCM), as shown in Fig. 5 a).

While the current and voltage may change their values and directions essentially suddenly, the change characterizing the power flow reversal, as shown in Fig. 5 b), the frequency adjustment can be made during a transient period. Thus, the operation may include a first transient period in which the switching frequency is gradually changed (increased) from the first to the second frequency, thereafter a reversal time during which the switching frequency is the second frequency and during which the power flow reversal occurs, and a second transient period in which the switching frequency is gradually changed (decreased) from the second to the first or to a third frequency at which the resonant tank has lower impedance than at the second frequency. The adjustment of the switching frequency in the first and second transient period can be made gradually, preferably in the form of an ascending ramp at the beginning and a descending ramp at the end of the transient period.

Due to the operation at higher impedance when the active modulation is switched from one side to the other, the step voltage across the resonance tank 22 faces a higher impedance than in the discontinuous conduction mode (DCM) and therefore the amplitude of the inrush current oscillation is significantly reduced, as shown in Fig. 6.

### Description of further general aspects

In the following, some further possible embodiments (also referred to as aspects) of the invention are described. Like the previously described embodiments, each aspect or embodiment can be combined with any other aspect or embodiment, unless they are mutually incompatible. Reference signs referring to the Figures are included for illustration but do not intend to limit the aspect to the embodiments shown in the Figures.

According to an aspect of the present disclosure, a method of bidirectional DC conversion in a series resonant converter (SRC) is provided. The method may also be characterized as reducing inrush current oscillations in the series resonant converter. Preferably, the method may be an at least partially implemented by a controller, in particular a digital controller carrying out a computer-implemented method.

The bidirectional SRC is a power electronic circuit used for DC/DC power conversion. Its bidirectional nature allows power to be converted between DC sources in both directions. Inrush current oscillations in an SRC are sudden, excessive currents that occur when the direction of current flow is reversed between primary and secondary sides of the SRC, especially under no-load or low load conditions. These oscillations can damage the components of the SRC and lead to reduced efficiency. Reducing these oscillations is essential to ensure the stability, reliability and longevity of the SRC and to maintain the quality of the power conversion.

According to an aspect of the present disclosure, the SRC is a bidirectional DC/DC converter, in particular a Half-Cycle Discontinuous Conduction Mode series resonant converter (HC-DCM-SRC).

According to an aspect of the present disclosure, the SRC comprises a primary side and a secondary side, each side having a DC terminal and an AC terminal and being adapted (in particular the respective bridge circuit being adapted) to be cyclically activated at a selectable switching frequency to convert power between the DC terminal and the AC terminal of the SRC.

According to an aspect of the present disclosure, each side of the SRC contains a resonant tank portion of a resonant tank, which is an electronic circuit designed to oscillate at selectable frequencies, typically centered around its natural resonant frequency, but possibly adjustable beyond this to suit specific application requirements. The resonant tank portions of both sides are either directly or indirectly interconnected, preferably between the primary and secondary sides of the SRC.

According to an aspect of the present disclosure, each side of the SRC also comprises a bridge circuit connecting the DC terminal and the resonant tank via the AC terminal. The bridge circuit is thus connected to the resonant tank via the AC terminal.

According to an aspect of the present disclosure, the bridge circuit is a switchable network that controls the flow and polarity of voltage and current, allowing power to be transferred through the resonant tank at selectable switching frequencies.

According to an aspect of the present disclosure, the bridge circuit is adapted to be cyclically activated at a selectable switching frequency to convert power between the DC terminal and the AC terminal.

The switching frequency is the frequency at which SRC switching devices turn on and off to determine the energy flow, in particular the flow direction, through the resonant tank.

The resonant frequency of the resonant tank is the frequency at which the reactive impedance of the inductive and capacitive components of the tank are essentially equal and opposite, resulting in maximum energy transfer efficiency within the tank. The resonant impedance refers to the impedance of the resonant tank at its resonant frequency, which preferably has a minimum absolute value, and influences the amount of power that can be transferred through the resonant tank.

According to an aspect of the present disclosure, the primary and secondary sides are SRC modules; in other words, the SRC comprises a primary module and a secondary module which are electrically connected either directly or indirectly. Each of the primary and secondary sides has a terminal/port to which a DC voltage network can be connected, the SRC being designed to transfer electrical power, preferably at different voltage levels, between one bus and the other. The DC terminal is the port on the primary/secondary side where the DC of a corresponding DC busis input/output depending on the cycle.

Cyclic activation refers to the periodic activation of the primary/secondary side, in particular the switching on and off of a bridge circuit of the corresponding side. The selectable switching frequency determines the rate at which the bridge circuit elements are switched on and off and at which the electrical power is transferred alternately in one direction and in the other.

According to an aspect of the present disclosure, the method comprises the step of operating the SRC under no-load or low load conditions for a power flow from one of the primary and secondary sides to the other side by activating said one side thereby acting as an input side. This involves selecting either the primary or secondary side of the SRC to start the power conversion. The selected side is then activated, i.e. it begins to act as the input side for the conversion process. This activation determines the direction of power flow within the SRC, effectively setting up the system for subsequent power conversion and transfer between the active side and the other side, which is passive.

No-load refers to a condition where there is substantially no load connected to the output side of the converter, for example at most 5% of the rated power. Low load refers to the presence of a small load close to zero, for example at most 20% or even at most 10% of the rated power.

According to an aspect of the present disclosure, the method further comprises the step of reversing the direction of the power flow by activating the other side, thereby becoming the input side. After the initial activation of one side (primary or secondary) for power conversion, this step involves switching the active role to the other side. The side that initially received power (output side) now becomes the input side and vice versa. This reversal of roles changes the direction of power flow within the SRC, enabling bidirectional DC conversion.

According to an aspect of the present disclosure, one side and the other side are activated cyclically and alternately at the switching frequency, with the reversal of the power flow direction causing inrush current oscillations. Reversing the direction of power flow involves switching the active role from one side of the SRC to the other, i.e. if the primary side was initially converting and transferring power, then the secondary side is activated to take over this role, effectively changing the direction of power flow, and vice versa. The alternate activation of the primary and secondary sides occurs in a controlled, cyclical manner at the switching frequency; this means that the primary and secondary sides regularly and systematically change their power conversion roles back and forth to ensure a continuous flow of power in alternating directions. When the direction of power flow is reversed, the steady state conditions of the circuit are disturbed, resulting in sudden changes in current flow; this abrupt change can cause inrush current oscillations which, if not properly managed, can potentially stress or damage the components of the converter.

According to an aspect of the present disclosure, the method further comprises the step of controlling the switching operation of the SRC to increase the impedance of the resonant tank of the input side above the resonant impedance prior to the power flow reversal, thereby reducing the amplitude of the inrush current oscillations during the reversal.

According to an aspect of the present disclosure, increasing the impedance of the resonant tank above the resonant impedance includes adjusting the circuit or operating conditions so that the impedance of the tank exceeds its impedance at resonance. Increasing the impedance prior to / before reversing the power flow is essential to ensure that the system is in the desired state when the reversal occurs. The achieved effect of reducing the amplitude of the inrush current oscillations during the reversal refers to reducing the amplitude of sudden current spikes that may occur when the power direction changes; increasing the impedance of the resonant tank in advance limits these spikes, ensuring a smoother transition and reducing potential damage.

According to another aspect of the present disclosure, a computer program embodied on a transitory or non-transitory computer-readable medium is provided. The program is configured to cause at least one processor to execute the method of reducing inrush current oscillations in a series resonant converter as described above.

According to another aspect of the present disclosure, a series resonant converter, SRC, for bidirectional DC conversion with reduced inrush current oscillation amplitude is provided. The SRC comprises:
a) a primary side and a secondary side directly or indirectly connected to each other, each side
   i) having a DC terminal and an AC terminal and being adapted to be cyclically activated at a selectable switching frequency to thereby act as an input side to convert power between its DC terminal and its AC terminal, thereby facilitating power flow from the input side to the other side and reversal of power flow direction, said reversal causing inrush current oscillations under no-load or low load conditions, and
   ii) comprising
      - a resonant tank having a resonant frequency and a resonant impedance, the resonant tank portions of both sides being interconnected; and
      - a bridge circuit connecting the DC terminal and the resonant tank via the AC terminal; and
b) a controller adapted to control the switching operation of the SRC under no-load or low load conditions i) for a power flow from the input side to the other side, ii) for cyclically and alternately reversing the direction of power flow at the switching frequency, and iii) for increasing the impedance of the resonant tank of the input side above the resonant impedance, thereby reducing the amplitude of the inrush current oscillations during the reversal.

An advantage of reversing the direction of power flow by activating the other side is that it facilitates bi-directional power exchange, allowing the SRC to adapt to changing power requirements, for example in systems where power needs to flow in both directions, such as battery storage or renewable energy applications. The reversing of the direction of power flow involves operating the SRC at least temporarily in no-load or low load conditions. According to an aspect of the present inventions, this operation in no-load or low load conditions is enabled without excessive accompanying inrush current.

A technical effect of raising the impedance of the resonant tank above the resonant impedance prior to power flow reversal is to limit the rate at which the current can rise, thereby reducing the amplitude of inrush current oscillations and/or the peak current that can flow through the circuit during power flow reversal. A benefit of this is a reduction in the likelihood of component stress and damage.

According to embodiments described herein, controlling the switching operation of the SRC 10 may comprise controlling the operation of the input side bridge circuit 20. In doing so, the SRC 10 may manage the power flow, thereby helping to reduce the amplitude of inrush current oscillations during the reversal of the direction of the power flow, particularly under no-load or low load conditions where inrush currents may be more pronounced and potentially damaging to the SRC hardware.

According to embodiments described herein, step a) may comprise operating the SRC 10 in a half cycle discontinuous mode, HC-DCM. In this mode of operation, power transfer is interrupted for a portion of each cycle.. The HC-DCM modulation enables a particularly efficient operating point of a SRC, and additionally enables an operation tightly linking the primary-side and secondary-side voltages in open-loop operation.

According to embodiments described herein, step a) may comprise operating the SRC 10 in a self-regulating manner with respect to the primary and secondary side DC voltages 34, 36, capable of open-loop operation. This refers to the ability of the SRC 10 to automatically adjust the power conversion process based on the primary and secondary DC voltages 34, 36; this can be achieved in open-loop operation, i.e. without the need for closed-loop feedback control. The technical effect of open-loop operation is to reduce the need for complex control mechanisms such as closed-loop control, thereby simplifying system design and operation and advantageously enabling robust system design, lower production costs and/or easier maintenance.

According to embodiments described herein, step b) may comprise increasing the impedance of the resonant tank 22 above the resonant impedance by adjusting the switching frequency away from a target resonant frequency while maintaining the resonant frequency at the target resonant frequency. This allows the impedance of the resonant tank 22 to be increased above its level at the resonant frequency, thereby reducing the amplitude of inrush current oscillations and/or the peak current that can flow through the circuit during power flow reversal. This has the benefit of reducing the likelihood of component stress and damage.

In this document the target resonant frequency is defined as a pre-set resonant / switching frequency at which the SRC 10 is designed to operate before any measures are taken to adjust the tank impedance, or potentially if no such measures are taken.

In particular, adjusting the switching frequency is a form of frequency modulation. The modulation allows the impedance of the resonant tank 22 to be controlled, a key factor in managing inrush current oscillations and ensuring stable operation of the SRC 10. This approach uses the principles of frequency modulation to achieve desired electrical characteristics and performance in the converter.

According to embodiments described herein, the switching operation of the SRC 10 may be controlled to adjust the switching frequency and/or the resonant frequency to be different from each other. Preferably, this adjustment may include adjusting the switching frequency away from a target resonant frequency while maintaining the resonant frequency at the target resonant frequency, or adjusting the resonant frequency away from the target resonant frequency while maintaining the switching frequency at the target resonant frequency. Either adjustment can increase the resonant impedance of the resonant tank, thereby reducing the amplitude of inrush current oscillations and/or the peak current that can flow through the circuit during power flow reversal. A benefit of this is a reduction in the likelihood of component stress and damage.

According to embodiments described herein, step b) may comprise increasing the impedance of the resonant tank 22 above the resonant impedance by adjusting the resonant frequency away from the target resonant frequency while maintaining the switching frequency at the target resonant frequency. The increased impedance of the resonant tank 22 allows the amplitude of inrush current oscillations and/or the peak current that can flow through the circuit during power flow reversal to be reduced. The benefit is a reduction in the likelihood of component stress and damage.

According to embodiments described herein, step b) may comprise increasing the impedance of the resonant tank 22 above the resonant impedance by adjusting the value of any of the resonance determining components of the resonant tank 22, preferably while maintaining the switching frequency at the target resonant frequency. By changing the values of components within the resonant tank 22, thereby changing the resonant frequency of the resonant tank 22, it may be possible to reduce the amplitude of inrush current oscillations and/or the peak current that can flow through the circuit during power flow reversal. A benefit of this is a reduction in the likelihood of component stress and damage.

According to embodiments described herein, step b) may comprise increasing the impedance of the resonant tank 22 above the resonant impedance by adjusting the value of electronically controlled variable capacitors, e.g. varactors or varicaps, and/or variable inductors, e.g. varicoils, and/or variable resistors, e.g. varistors or field effect transistors, preferably while maintaining the switching frequency at the target resonant frequency. This may allow the amplitude of inrush current oscillations and/or the peak current that can flow through the circuit during power flow reversal to be reduced. A benefit of this is a reduction in the likelihood of component stress and damage.

According to embodiments described herein, the capacitances, inductances and/or resistances are adjustable in response to an applied control voltage, preferably allowing the impedance of the resonant tank 22 to be increased above the resonant impedance while maintaining the switching frequency at the target resonant frequency. This can reduce the amplitude of inrush current oscillations and/or the peak current that can flow through the circuit during power flow reversal. A benefit of this is a reduction in the likelihood of component stress and damage.

According to embodiments described herein, step b) may comprise increasing the impedance of the resonant tank 22 above the resonant impedance during a transient period including a reversal time at which the power flow reversal occurs. This refers to a specific adjustment of the impedance of the resonant tank 22 during critical moments of operation, in particular during transient periods which include the instance of power flow reversal. This allows the impact of sudden changes in power flow to be significantly reduced, beneficially allowing smoother transitions and reduced stress on the system.

According to embodiments described herein, step b) may comprise increasing the impedance of the resonant tank 22 above the resonant impedance during a transient period including a reversal time at which the power flow reversal occurs, the transient period having a duration of 6 to 100 or 3 to 50 cycles. This may allow precise control of the behaviour of the SRC 10 during critical operating phases, thereby allowing the stability and performance of the SRC 10 to be improved.

According to embodiments described herein, step b) may comprise increasing the impedance of the resonant tank 22 above the resonant impedance during a transient period including a reversal time at which the power flow reversal occurs, the reversal time being approximately in the middle of the transient period. This may allow a balanced transition to be ensured during power flow reversals, thereby beneficially enhancing the stability of the system.

According to embodiments described herein, step b) may comprise increasing the impedance of the resonant tank 22 above the resonant impedance by adjusting/changing the switching frequency in the range of 100%-10% when using a resonant tank 22 having a Q-factor in the range of 10-30. The Q-factor of a resonant tank 22 is a measure of the sharpness of its resonance. A higher Q-factor means a sharper, more pronounced resonance peak. The relationship between the Q-factor and the switching frequency setting is important because the Q-factor influences how sensitive the resonant tank 22 is to changes in switching frequency. For tanks with a high Q-factor, small adjustments in the switching frequency can result in significant changes in impedance, which is critical for effectively managing the performance of the SRC 10, particularly in controlling inrush currents and ensuring efficient power conversion. Fine-tuning the switching frequency within a certain percentage range of its nominal value, particularly in a resonant tank 22 with a Q-factor between 10 and 30, can allow the impedance level of the resonant tank 22 to be precisely controlled, which is beneficial for the effective management of inrush currents and oscillations.

According to embodiments described herein, step b) may comprise modifying the switching frequency to a second switching frequency preferably having a value of the first switching frequency multiplied by at least 1.2, preferably at least 1.5, and more preferably at least 2.0. The factor may be at most 5.0, preferably at most 3.5. On the other hand, the second switching frequency may have a value of the first switching frequency multiplied by at most 0.8, preferably at most 0.6 and more preferably at most 0.5. In this case the factor may be at least 0.2, preferably at least 0.3. Increasing the frequency above the resonant frequency (well above the first switching frequency) enables the semiconductor switches to be commutated under zero voltage, so-called Zero-Voltage Switching (ZVS). Reducing the frequency below the resonant frequency (well below the first switching frequency) may be beneficial for control reasons. Alternatively, the resonant frequency of the resonant tank 22 may be changed by any of the factors above mentioned for the change in switching frequency.

According to the embodiments described herein, step b) may comprise gradually changing the switching frequency and/or the resonant frequency of the resonant tank 22, preferably in the form of an ascending/descending ramp. The frequency change may follow a controlled pattern, such as an ascending or descending ramp, to smoothly transition the frequency over time. This can provide a stable and controlled change in the power flow, beneficially allowing the reduction of sudden spikes or drops in power.

According to embodiments described herein, step b) may comprise modifying the switching frequency and/or the resonant frequency of the resonant tank 22 at the beginning of the transient period by increasing/decreasing the switching frequency and/or the resonant frequency to the cut-off frequency and/or before the end of the transient period by decreasing/increasing the switching frequency and/or the resonant frequency to the target resonant frequency. This involves modulating the switching or resonant frequencies at the beginning to reach a cut-off frequency and adjusting them back to the target resonant frequency by the end of the transient period. The effect of this is to limit the increase in tank impedance to the critical transient phases and to control the inrush current and resonance behaviour only during these phases, thereby allowing the transferred energy to be increased.

According to embodiments described herein, controlling the switching operation of the SRC 10 may comprise adaptively adjusting the switching frequency based on real-time feedback from the resonant tank 22, in particular based on parameters that change during no-load conditions, such as internal voltage levels and currents, thereby preferably enabling adaptation to different load conditions related to residual charge in capacitors, inductance values, variations in the power source or temperature variations.

According to embodiments described herein, controlling the switching operation of the SRC 10 may comprise controlling the phase relationship between the current and voltage in the resonant tank 22 based on a feedback loop to maintain a resonant condition. This may allow i) the power transfer efficiency to be improved, and/or ii) the switching frequency and/or the impedance of the resonant tank 22 to be regulated.

According to embodiments described herein, controlling the switching operation of the SRC 10 may comprise predicting an appropriate switching frequency and/or resonant tank 22 adjustments and/or pre-emptively adjusting operating parameters based on machine learning techniques, preferably by analysing and learning from historical data and operating patterns. This may include using machine learning techniques to anticipate and determine a suitable or even optimal switching frequency and resonant tank 22 adjustments in the SRC 10. This can have the effect of increasing the adaptability and efficiency of the SRC 10, potentially allowing more accurate and proactive control of its operation. The use of machine learning for predictive adjustments based on historical operating data leads to improved management of inrush currents and overall system stability, especially under variable load conditions.

According to embodiments described herein, each of the resonant tank portions 22a, 22b comprises resonant inductances formed at least in part by i) leakage inductances, and/or ii) an induction coil, and/or iii) a primary winding of the transformer 26. Leakage inductance, which may be a by-product of imperfect coupling in the transformer 26, may allow the value of a dedicated inductance of the resonance tank to be reduced or even the inductance to be omitted. An induction coil is a standard electronic component, which allows for standardised quality and improved longevity. Using the primary winding of a transformer as part of the resonant inductances integrates the transformer winding into the resonant circuit, allowing the value of a dedicated resonant tank inductance to be reduced or even the inductance to be omitted.

According to embodiments described herein, the resonant tank 22 may comprise electronically controlled variable capacitors, e.g. varactors or varicaps, and/or variable inductors, e.g. varicoils, and/or variable resistors, e.g. varistors or field effect transistors, preferably the capacitors, inductances and/or resistors being adjustable in response to an applied control voltage, thereby enabling the resonant frequency of the resonant tank 22 to be adjusted.

According to embodiments described herein, the SRC 10 and in particular its bridges on the primary and/or secondary side has a bridge topology. The brigde topology may have any type of bridge leg(s), such as: a half bridge, a full bridge, an NPC bridge, a flying capacitor bridge, and/or a T-type bridge leg, just to name a few examples. The SRC 10 and in particular its bridges on the primary and/or secondary side may comprise semiconductor switches such as FETs (e.g, MOSFETs, in particular SiC MOSFETs), HEMTs (e.g., GaN HEMTs), IGBTs and/or any other type of semiconductor switches enabling the handling of the rated (high) power levels. A half bridge topology as shown in Fig. 1a can have the effect of simplifying the design and reducing the number of components, thereby enabling cost effective solutions for lower power applications. A full bridge topology as shown in Fig. 1b can provide greater control over power conversion and higher efficiency, enabling the SRC 10 to be used in more demanding, higher power applications. An NPC (Neutral Point Clamped) bridge topology can have the effect of reducing the voltage stress on the switches, which can be beneficial in handling medium voltage applications more efficiently. A flying capacitor bridge topology can have the effect of utilizing lower-voltage devices to interface a medium-voltage while enabling multi-level operation. The semiconductor switches can be selected among the ones mentioned above to achieve the desired switching speed and efficiency of the SRC 10 while also supporting the rated power levels, and while also enabling precise control and handling of high power levels in various operating contexts.

According to embodiments described herein, the controller 24 may be electrically connected to each of the bridge circuits 20, preferably thereby being adapted to control the operation of the SRC 10 and/or the bridge circuit 20, in particular the switching frequency, in particular away from the target resonant frequency, while maintaining the resonant frequency at the target resonant frequency, thereby beneficially increasing the resonant tank impedance to reduce the amplitude of inrush current oscillations during power flow reversal.

According to embodiments described herein, the controller 24 may be electrically connected to the resonant tank 22, preferably thereby adapted to control the operation of the resonant tank 22. In particular, such control may allow the resonant frequency to be adjusted away from the target resonant frequency while maintaining the switching frequency at the target resonant frequency, thereby beneficially increasing the resonant tank impedance to reduce the amplitude of inrush current oscillations during power flow reversal.

According to embodiments described herein, the controller 24 may be electrically connected to each of the resonant tank portions and to the bridge circuits to allow both the resonant and switching frequencies to be controlled to be different from each other, thereby beneficially increasing the resonant tank impedance to reduce the amplitude of inrush current oscillations during power flow reversal.

According to embodiments described herein, the controller 24 may be connected to both bridge circuits 20. The controller 24 may be adapted to control the bridge circuit 20, preferably each of the bridge circuits 20, to adjust the switching frequency away from a target resonant frequency while maintaining the resonant frequency at the target resonant frequency. This may allow the impedance of the resonant tank 22 to be increased above its level at the resonant frequency, thereby reducing the amplitude of inrush current oscillations and/or the peak current that can flow through the circuit during power flow reversal. This is beneficial in reducing the likelihood of component stress and damage.

According to embodiments described herein, the controller 24 may be connected to both resonant tank portions 22a, 22b. The controller 24 may be adapted to control the resonant tank 22, preferably each of the resonant portions 22a, 22b, to adjust the resonant frequency away from the target resonant frequency while maintaining the switching frequency at the target resonant frequency. The increased impedance of the resonant tank 22 allows the amplitude of inrush current oscillations and/or the peak current that can flow through the circuit during power flow reversal to be reduced. The benefit is a reduction in the likelihood of component stress and damage.

According to embodiments described herein, the controller 24 may be adapted for feedback control based on a phase relationship between current and voltage in the resonant tank 22. This can have the effect of synchronising the power supply with the requirements of the load, beneficially enabling a more efficient and reliable power conversion process.

According to embodiments described herein, the controller 24 may be adapted to predict i) an appropriate switching frequency and/or ii) resonant tank 22 adjustments and/or iii) pre-emptively adjust operating parameters based on machine learning techniques, preferably by analysing and learning from historical data and operating patterns. Adapting the controller 24 to predict the appropriate switching frequency can have the effect of matching the frequency to the current load conditions, thereby enabling more efficient power transfer and reduced thermal stress on components. Adjustment of resonant tank parameters based on machine learning predictions can result in precise matching of power handling capabilities to current demands, allowing for more consistent power delivery and reduced risk of component overload. Pre-emptively adjusting operating parameters using machine learning techniques can have the effect of anticipating and adapting to potential changes in load or system conditions, allowing smoother transitions and maintaining system stability under variable operating scenarios.

This written description uses examples to disclose the disclosure, including the best mode, and also to enable any person skilled in the art to practice the described subject-matter, including making and using any apparatus or system. Embodiments described herein provide a method of reducing inrush current oscillations in a series resonant converter and a series resonant converter for bidirectional DC conversion with reduced inrush current oscillation amplitude, the reduction of inrush current oscillation in particular enabling a reduction in the likelihood of SRC component stress and damage. While various specific embodiments have been disclosed in the foregoing, mutually non-exclusive features of the embodiments described above may be combined with each other. The patentable scope is defined by the claims, and other examples are intended to be within the scope of the claims if they have structural elements that do not differ from the literal language of the claims, or if they include equivalent structural elements with insubstantial differences from the literal language of the claims.

### REFERENCE SIGNS

- 10: series resonant converter, SRC
- 12: primary side
- 14: secondary side
- 16: DC terminal
- 18: AC terminal
- 20: bridge circuit
- 22: resonant tank
- 22a, 22b: resonant tank portions
- 24: controller
- 26: transformer
- 30: transformer current at the input side
- 32: transformer current at the output side
- 34: voltage at the bridge on the input side
- 36: voltage at the bridge on the output side
- 100: method of reducing inrush current oscillations
- 102: operating the SRC for a power flow
- 104: changing operation of the SRC for increasing the impedance of the resonant tank
- 106: reversing the direction of the power flow
- 108: changing operation of the SRC for decreasing the impedance of the resonant tank
- 110: operating the SRC for a reversed power flow

## Claims

1. A method (100) of bidirectional DC conversion in a series resonant converter, SRC (10), the SRC (10) comprising a primary side (12), a secondary side (14) and a resonant tank (22) having a resonant frequency and a resonant impedance, each side (12, 14) having:
- a DC terminal (16); and
- a bridge circuit (20) connected to the DC terminal (16) and to the resonant tank (22), and being adapted to be cyclically activated at a variably selectable switching frequency to convert power between the DC terminal (16) and the resonant tank (22),
the method comprising:
a) operating (102) the SRC (10) for a power flow from one of the primary and secondary sides (12, 14) to the other side by activating the bridge circuit (20) of at least the one side at a first switching frequency;
b) changing (106) operation of the SRC (10) for increasing the impedance of the resonant tank (22);
c) when the impedance has been increased, reversing (104) the direction of the power flow, so that the SRC (10) is operated for a power flow from the other side to the one side.

2. The method (100) according to claim 1, wherein b) includes
changing the switching frequency of the bridge circuit (20) of at least the one side to a second switching frequency at which the impedance of the resonant tank (22) is increased relative to the first switching frequency.

3. The method (100) according to claim 2, wherein step c) is performed when the switching frequency has been changed to the second switching frequency, and includes reversing (104) the direction of the power flow, whereby the bridge circuits (20) of the one side and the other side are activated cyclically at the second switching frequency.

4. The method (100) according to any one of claims 2 and 3, wherein at least one of the following:
i) the first frequency is closer to a resonance frequency of the resonant tank (22) than the second frequency, in particular wherein the difference of the second frequency from the resonant frequency is at least 3 times, preferably at least 5 times the difference of the first frequency from the resonant frequency;
ii) the second frequency is by at least 25%, preferably at least 50% higher than the first frequency.

5. The method (100) according to any preceding claim, further comprising at least one of d1), d2), and e):
d1) after the power flow has been reversed, changing (108) operation of the SRC (10) for decreasing the impedance of the resonant tank (22);
d2) after the power flow has been reversed, changing (108) the switching frequency to the first switching frequency, or to a third frequency to decrease the impedance of the resonant tank (22);
e) after the power flow has been reversed, and in particular after the impedance has been decreased, operating (110) the SRC (10) for a power flow from the other side to the one side by activating the bridge circuit (20) of at least the other side, in particular by activating the bridge circuit (20) of at least the other side at the first or third switching frequency.

6. The method (100) according to any preceding claim, wherein at least step c) includes activating the bridge circuit (20) of both the primary and secondary sides, in particular at the same switching frequency.

7. The method (100) according to any preceding claim, wherein step b) and optionally step d1) or d2) comprises changing the switching frequency and/or the resonant frequency of the resonant tank (22) gradually, in particular in the form of an ascending or descending ramp, and in particular during a transient period having a length of at least 6 cycles, preferably at least 20 cycles.

8. The method (100) according to any preceding claim, wherein
the SRC (10) comprises a transformer (26) coupling the primary and secondary sides (12, 14) to each other.

9. The method (100) according to any preceding claim, wherein the resonant tank (22) has resonant tank portions (22a, 22b) of the primary and secondary sides (12, 14); and in particular wherein at least one of the following i) to v):
i) each of the resonant tank portions are connected to the respective bridge circuit (20) via an AC terminal (18);
ii) the resonant tank (22) comprises a transformer (26), the transformer having a primary side transformer coil belonging to the resonant tank portion (22a) of the primary side (12) and a secondary side transformer coil belonging to the resonant tank portion (22b) of the secondary side (12);
iii) the resonant tank portions (22a, 22b) of both sides (12, 14) are inductively coupled to each other by a transformer (26);
iv) each of the resonant tank portions (22a, 22b) comprises a resonant inductance formed at least in part by leakage inductances, an induction coil, and/or a coil of the transformer (26);
v) each of the resonant tank portions (22a, 22b) comprises a resonant capacitance.

10. The method (100) according to any preceding claim, wherein the bridge circuits (20) have a bridge topology, the bridge topology being preferably designed as at least one of a half bridge, a full bridge, an NPC bridge, a flying capacitor bridge, and a T-type bridge.

11. A series resonant converter, SRC (10), for bidirectional DC conversion, the SRC (10) comprising a primary side (12), a secondary side (14), a resonant tank (22) having a resonant frequency and a resonant impedance, and a controller (24), each side (12, 14) having:
- a DC terminal (16);
- a bridge circuit (20) connected to the DC terminal (16) and to the resonant tank (22), and being adapted to be cyclically activated at a variably selectable switching frequency to convert power between the DC terminal (16) and the resonant tank (22),
the controller being configured for:
a) operating (102) the SRC (10) for a power flow from one of the primary and secondary sides (12, 14) to the other side by activating the bridge circuit (20) of at least the one side at a first switching frequency;
b) changing (106) operation of the SRC (10) for increasing the impedance of the resonant tank (22);
c) when the impedance has been increased, reversing (104) the direction of the power flow, so that the SRC (10) is operated for a power flow from the other side to the one side.

12. The series resonant converter (10) according to claim 11, being adapted for carrying out the method according to any one of the claims 1 to 10.

13. The series resonant converter (10) according to any of the claims 11 to 12, wherein
- the controller (24) is electrically connected to each of the bridge circuits (20), preferably thereby being adapted to control the operation of the SRC (10) and/or of the bridge circuit (20), in particular the switching frequency.

14. The series resonant converter (10) according to any of the claims 11 to 13, wherein the controller (24) is adapted to control the bridge circuit (20) to adjust the switching frequency away from the first frequency.
